# EUROPEAN PATENT APPLICATION

(11) **EP 1 626 476 A1**
(43) Date of publication of application: **15.02.2006**
(21) Application number: 04733109.5
(22) Date of filing: 14.05.2004
(51) Int. Cl.: H02J 7/14, H02J 1/00

(54) **VEHICLE POWER SUPPLY CONTROL APPARATUS AND VEHICLE POWER SUPPLY APPARATUS**

(30) Priority: 21.05.2003 JP 2003142900
(71) Applicant: MIKUNI CORPORATION, Chiyoda-ku, Tokyo 101-0021 (JP)
(72) Inventor: YAMAZAKI, Shigeru, c/o MIKUNI CORPORATION, Odawara-shi, Kanagawa 250-0055 (JP)
(74) Representative: Beyer, Andreas
(86) International application number: PCT/JP2004/006524
(87) International publication number: WO 2004/105210

(57) **Abstract**

The present invention provides a power supply control apparatus and a power supply for vehicles capable of outputting stable voltages at least during a period of time the engine is started and operated. The apparatus has a charging circuit that converts power-supply power with a first voltage level supplied from a main power supply circuit in an internal-combustion engine into power with a second voltage level, a capacitor that charges the power with the second voltage level which is converted in the charging circuit, and a discharging circuit that converts the power with the second voltage level charged in the capacitor into the power with the first voltage level to supply to the main power supply circuit when the voltage of the power-supply power falls below a preset specified value, and thus maintains the voltage at a predetermined range in the main power supply circuit in the internal-combustion engine.

## Description

### Technical Field

The present invention relates to a power supply control apparatus and a power supply for vehicles including two-wheeled vehicles each having an internal-combustion engine, and more particularly, to a power supply control apparatus, for vehicles without a battery (hereinafter, referred to as "battery-less") or with a small-capacity battery, which stabilizes an output voltage value of a power supply.

### Background Art

A four-wheeled vehicle such as a passenger automobile is generally provided with a large-capacity battery, and the battery mounted on the vehicle supplies a stable power supply voltage (for example, DC12V) to an internal-combustion engine (hereinafter, referred to as an "engine" as appropriate) and each load of the vehicle. A generator is coupled to a crank shaft of the engine, and when power consumption of loads is smaller than the generated electric power of the generator, the excessive power is charged in the battery. Meanwhile, when power consumption of the loads exceeds the generated electric power of the generator, the power corresponding to the shortage is supplied from the battery. The generator receives supply of the power from the battery when the engine is actuated, and servers as an electric motor that drives and rotates the engine.

An electrically-operated fuel injection apparatus mounted on such a four-wheeled vehicle such as a passenger automobile is capable of receiving supply of stable voltage from the battery, and therefore, always enables fuel injection of a necessary amount required from the engine.

Meanwhile, many vehicles such as two-wheeled vehicles, snow mobiles, and small-size motor boats adopt a mechanical carburetor, enable startup of the engine by human power using a kick lever or start-up rope, and therefore, do not require a large-capacity battery necessarily. Further, in these vehicles, since it is required to reduce the total weight of the vehicle as much as possible, it is desired that the battery is smaller and lighter or the battery-less.

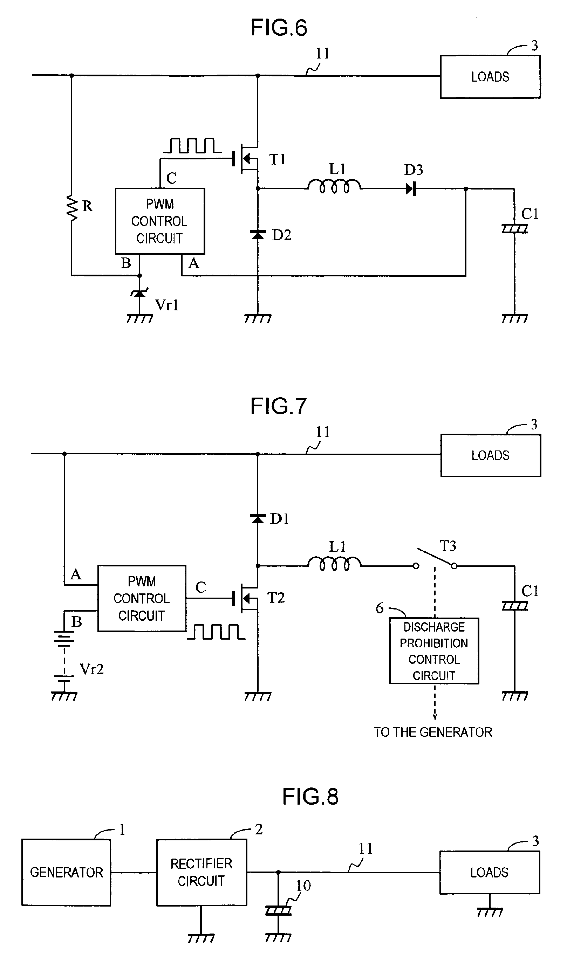

FIG. 8 shows an example of a power supply for vehicles such as two-wheeled vehicles with no battery mounted thereon according to a conventional technique. Thepower supply is provided with a rectifier circuit 2 that rectifies AC power output from a generator 1 and a capacitor 10 that performs smoothing on the rectified power, and during the revolution of the engine, supplies the power to pulse-like variable loads occurring periodically such as a fuel injection apparatus and an ignition plug, and loads without variations such as a headlamp.

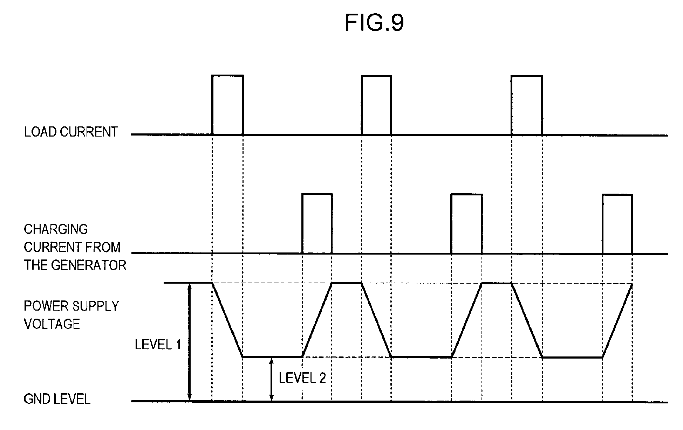

FIG.9 shows variations in output voltage (power supply voltage) of the power supply when variable loads such as a fuel injection apparatus and an ignition plug are connected to the power supply for vehicles as shown in FIG.8.

As shown in FIG.9, when the power supply voltage (voltage of a power supply output line 11 as shown in FIG.8) has level 1 and a pulse-like load current flows from the power supply output line 11, the voltage of the capacitor 10 falls during the flow, and reaches level 2. When the load current is halted in level 2, the voltage of the capacitor 10 maintains level 2. Then, the generator 1 supplies the generated power via the rectifier circuit 2, the charging current flows to the capacitor 10, and the voltage of the power supply output line 11 increases gradually and recovers level 1. Thus, the voltage level of the power supply output line 11 in the power supply periodically varies largely. A battery is not connected to the power supply as shown in FIG.8, but even when a small-capacity battery (not shown) is connected to the apparatus as a substitute for the capacitor 10 or in parallel with the capacitor 10, the above-mentioned situation similarly occurs with deterioration of the battery proceeded.

In recent years, electrically-operated fuel injection apparatuses have been mounted on relatively small-size vehicles such as many two-wheeled vehicles. Stabilized power supply after starting up the engine is important to a fuel injection apparatus and ignition apparatus, and stabilization of output voltages is more strongly required in the power supply for vehicles. However, it is physically difficult to mount a battery to be mounted on a four-wheeled vehicle on such a small-size car.

Therefore, an apparatus is disclosed where power supply to a control apparatus (hereinafter referred to as "ECU") is performed by switching between a generator by human power such as a battery and kicking function and a generator by driving power of an internal-combustion engine corresponding to the operation state of the internal-combustion engine where ECU electronically controls modules such as an electrically-operated fuel injection apparatus and ignition plug corresponding to the operation state of the engine.
[Patent Reference 1]
Japanese Patent Application Laid-Open No.2003-3889

### Disclosure of Invention

### The Problem to be Solved by the Invention

As described above, recent ECU mounted on each vehicle including a two-wheeled vehicle and four-wheeled vehicle is comprised of IC chips such as a microprocessor and chips. In order to prevent occurrences of a malfunction of control circuitry, it is necessary to reduce a variation width in power supply voltage allowable in ECU provided with IC chips as much as possible.

However, as disclosed in Patent Reference 1, when a configuration is made complicated in a power supply control apparatus for vehicles that supplies power to ECU, increases are brought in size and manufacturing cost in the power supply.

In recent years, the inventors of the present invention have developed a fuel injection system (hereinafter referred to as an "electromagnetic fuel injection system") using an electromagnetic fuel injection pump that pressurizes fuel to inject, as distinct from a conventional type electronic fuel injection system that injects fuel which is pressurized and fed using a fuel pump and regulator.

The electromagnetic fuel injection system implements miniaturization and cost reduction larger than the conventional type carburetor apparatus and electronically-controlled fuel injection, and therefore, is capable of being widelymounted on not only four-wheeled automobiles but also on various vehicles such as two-wheeled vehicles.

It is an object of the present invention to provide a power supply for vehicles having an internal-combustion engine capable of outputting the stable voltage to loads such as a control apparatus, fuel injection apparatus and ignition plug mounted on the vehicles during a period of time the engine is started and operated so as to implement mounting of an electrically-operated fuel injection apparatus also on various vehicles such as two-wheeled vehicles without leading to increases in size and cost in a power supply control apparatus.

It is another object of the present invention to provide a power supply for vehicles that corrects the varied power supply voltage to be constant and supplies the stable power supply voltage to a fuel injection apparatus also in a battery-less vehicle.

### Means for Solving the Problem

Therefore, the present invention provides a power supply control apparatus for vehicles having a charging circuit that converts power-supply power with a first voltage level supplied from a main power supply circuit in an internal-combustion engine into power with a second voltage level, a capacitor that charges the power with the second voltage level which is converted in the charging circuit, and a discharging circuit that converts the power with the second voltage level charged in the capacitor into the power with the first voltage level to supply to the main power supply circuit when the voltage of the power-supply power falls below a preset specified value, whereby the power supply voltage is maintained at a predetermined range in the main power supply circuit in the internal-combustion engine.

The present invention further provides a power supply for vehicles having a main power supply circuit that supplies power generated by a generator coupled to an internal-combustion engine to each load, a charging circuit that converts power-supply power with a first voltage level supplied from the main power supply circuit into power with a second voltage level, a capacitor that charges the power with the second voltage level which is converted in the charging circuit, and a discharging circuit that converts the power with the second voltage level charged in the capacitor into the power with the first voltage level to supply to the main power supply circuit when a power supply voltage falls below a preset specified value, whereby the power supply voltage is maintained at a predetermined range in the main power supply circuit in the internal-combustion engine.

Thus, in the present invention, the power with the different voltage level is charged in the capacitor that is not directly connected to the main power supply circuit electrically, and when necessary, the power charged in the capacitor is discharged to supply to the main power supply circuit, whereby it is possible to supply power to loads of the internal-combustion engine even when the power charged in the main power supply circuit is consumed.

The power supply control apparatus and the power supply for vehicles of the present invention further have a discharge prohibition control circuit that detects a halt of the internal-combustion engine and prohibits the operation of the discharging circuit. In this way, consumption of the energy charged in the capacitor is prevented during the halt of the internal-combustion engine so as to prevent for actuation of the internal-combustion engine. The halt of the internal-combustion engine is detected based on a crank rotation signal of the internal-combustion engine or an output voltage waveform of the generator.

The discharging circuit operations at the time of starting up the internal-combustion engine, and the power is supplied to the main power supply circuit from the capacitor, enabling actuation of the internal-combustion engine.

The charging circuit constituting the power supply control apparatus for vehicles has a charge control circuit that interrupts charging to the capacitor from the main power supply circuit when a voltage level of the capacitor exceeds a predetermined value. This is because of preventing the capacitor voltage from exceeding a specified tolerance voltage value. The charging circuit is actuated only when the voltage of the main power supply circuit is a predetermined value or more and the voltage of the capacitor decreases to a predetermined value or less.

The capacitor in the power supply control apparatus for vehicles is an electric double layer capacitor with extremely a little internal self-discharging. By this means, the charged power is not consumed even when the vehicle is not used for a long time, and it is thus possible to actuate the internal-combustion engine.

In order to secure the power charged in the capacitor for a longer time, the power supply control apparatus for vehicles further has a photoelectric conversion apparatus and a photo-power charging circuit that charges the capacitor with the power generated in the photoelectric conversion apparatus.

Each of the charging circuit and the discharging circuit is comprised of for example, a switching regulator scheme DC/DC converter. The DC/DC converter constituting the charging circuit and the DC/DC converter constituting the discharging circuit share a single inductor, and one terminal of the inductor is connected to the charging circuit and the discharging circuit, while the other terminal of the inductor is connected to the capacitor side. It is thereby possible to decrease a power loss as possible in voltage conversion between the first voltage level and the second voltage level and miniaturize the apparatus.

The voltage level (second voltage level) with which the capacitor is charged is lower than the voltage level (first voltage level) of an output line of the main power supply circuit.

### Effect of the Invention

The power supply control apparatus for vehicles according to the present invention has the charging circuit that converts power-supply power with a first voltage level supplied from the main power supply circuit in the internal-combustion engine into power with a second voltage level, the capacitor that charges the power with the second voltage level which is converted in the charging circuit, and the discharging circuit that converts the power with the second voltage level charged in the capacitor into the power with the first voltage level to supply to the main power supply circuit when the voltage of the power-supply power falls below a preset specified value, and thus maintains the voltage at a predetermined range in the main power supply circuit in the internal-combustion engine.

By this means, even when the power charged in the main power supply circuit is lost, it is implemented that stable power is output to loads such as a control apparatus, fuel injection apparatus and ignition plug mounted on the vehicle at least during a period of time the engine is started and operated. It is thus made possible to mount an electronic fuel injection apparatus on a battery-less vehicle.

### Best Mode for Carrying Out the Invention

Embodiments of a power supply control apparatus and a power supply for vehicles having an internal-combustion engine according to the present invention will be specifically described below with reference to accompanying drawings.

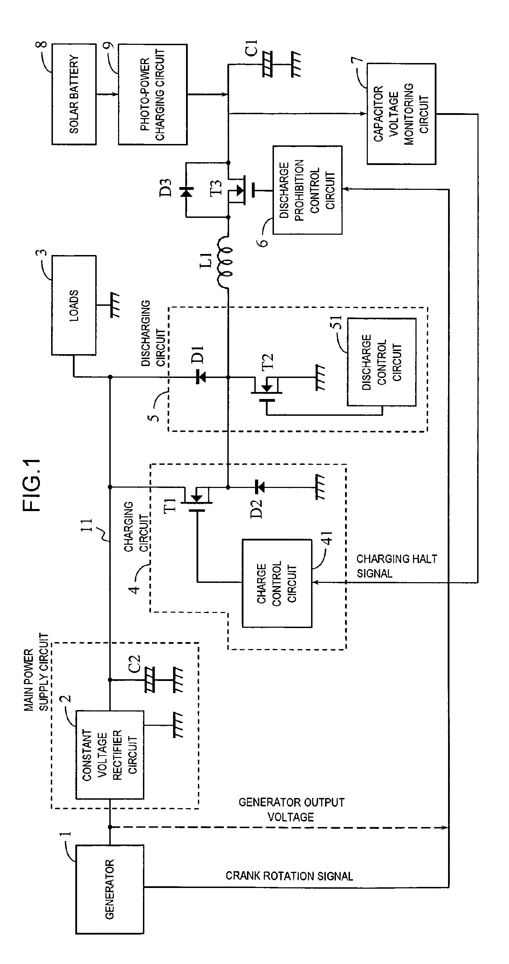

FIG.1 shows an example of a circuit configuration of the power supply control apparatus for vehicles of the present invention. In FIG.1, the same modules as in FIG.8 (conventional apparatus) are assigned the same reference numerals.

The power supply control apparatus for vehicles in this embodiment is provided with a main power supply circuit (2 and C2) that supplies power generated in a generator 1 coupled to a crank shaft of an engine to loads 3, a charging circuit 4 that converts the power in the main power supply circuit into a voltage (second voltage level) different fromavoltage level (firstvoltage level, about 12V) of the power supply output line 11 in the main power supply circuit, a capacitor C1 that charges the power with the second voltage level converted in the charging circuit, a discharging circuit 5 that converts the power with the second voltage level charged in the capacitor C1 into the power with the first voltage level to supply to the main power supply circuit when the voltage of the main power supply circuit decreases below a preset specified value (for example, 10V), an inductance L1 shared in charging and discharging, and a discharge prohibition control circuit 6 that detects a halt of the engine and prohibits the operation of the discharging circuit.

In this embodiment of the present invention, the first voltage level is set, for example, in a range of DC 10V to 13. 5V (as a representative value, DC 12V), and the second voltage level is set in a range of DC 2.5V to 4V (as a representative value, DC 3V).

In this embodiment, the apparatus is further provided with a capacitor voltage monitoring circuit 7 that monitors a voltage value of the capacitor C1, a solar battery (photoelectric conversion apparatus) 8 that converts sunlight into electric energy, and a photo-power charging circuit 9 that converts an output of the solar battery 8 into a voltage/current with an appropriate value for charging.

To the power supply output line 11 of the main power supply circuit (2 and C2) are connected loads 3 such as a control circuit including IC such as a microprocessor and chips, an electromagnetic fuel injection apparatus, an ignition plug, and lamps.

Described below is the operation of the power supply control apparatus and the power supply for vehicles according to this embodiment of the present invention as shown in FIG.1.

During the revolution of the engine mounted on a vehicle, the generator 1 (three-phase generator) directly coupled to the crank shaft of the engine converts the revolution energy received from the engine into AC power. Three-phase AC power output from the generator 1 is rectified in the constant voltage rectifier circuit 2. The rectified DC power including many ripples are smoothed and charged in the capacitor C2. Then, the capacitor C2 supplies the DC power to each of the loads 3 as described above. In order to reduce the ripples of the DC power to supply to the loads 3, an inductance (not shown) may be inserted between the constant voltage rectifier circuit 2 and the capacitor C2.

In FIG.1, the charging circuit 4 is provided with a charge control circuit 41, a transistor T1, and a diode D2. The discharging circuit 5 is provided with a discharge control circuit 51, a transistor T2 and a diode D1.

In addition, in this specification, "charge" means storing energy in the capacitor C1, and "discharge" means releasing the energy charged in the capacitor C1 to the main power supply circuit side.

Each of the charging circuit 4 and the discharging circuit 5 constitutes a PWM (Pulse Width Modulation) switching regulator scheme DC/DC converter, and the inductor L1 is used both in charge and discharge. As shown in the figure, the inductor L1 is connected at one terminal to the charging circuit 4 and discharging circuit 5, while being connected at the other terminal to the capacitor C1 side.

In this embodiment, the charging circuit 4 is a voltage decreasing circuit that decreases the voltage in the example of this embodiment of the present invention, does not need to be a switching regulator scheme of DC/DC converter always, and may be a series regulator (voltage decreasing scheme regulator). However, in terms of energy efficiency and the share use of the inductor L1 with the discharging circuit 5 in this embodiment, the switching regulator scheme is desired.

The discharge prohibition control circuit 6 detects a halt of the engine to prohibit the operation of the discharging circuit, and thus is to hold the energy charged in the capacitor C1 for a long time. Therefore, the discharge prohibition control circuit receives as its input a crank rotation signal of the engine or an output voltage waveform of the generator 1, switches the transistor T3 off when detecting that the engine is halted, and thus completely separates the power supply output line 11 from the capacitor C1.

The capacitor C1 used in the apparatus is an electric double layer capacitor with a low voltage and high capacitance. Used is the capacitor having specifications that the tolerance voltage ranges from approximately 3V to 6V and that the capacitance ranges from several to several tens of farads.

An n-channel MOS FET is used as the transistor T1, T2 or T3 used in this embodiment. A p-channel MOS FET or bipolar transistor is also used, as a substitute for the n-channel MOS FET.

As described above, the power supply control apparatus or the power supply for vehicles converts the power with the first voltage level (about 12V) generated in the generator 1 during the revolution of the engine into the second voltage level (DC 2.5 to 4V) in the charging circuit 4 to charge the large-capacitance capacitor C1. Then, during the halt of the engine, the capacitor C1 is separated from the power supply output line 11 of the main power supply circuit (2 and C2) so as to hold the energy charged in the capacitor C1 for a long time. At the time of subsequent actuation of the engine, the discharging circuit 5 is operated, and the energy charged in the capacitor C1 is thereby increased to the first voltage level (about 12V) and supplied to the power supply output line 11. By this means, when the engine is actuated, power of a predetermined voltage is supplied to loads such as the control circuit and electromagnetic fuel injection system, and it is thus possible to ensure the normal operation.

The capacitor voltage monitoring circuit 7 as shown in FIG.1 supplies a charging halt signal to the charge control circuit 41 when the voltage of the capacitor C1 exceeds a predetermined value, and thus prevents the capacitor C1 from charging a voltage exceeding a specified tolerance voltage value.

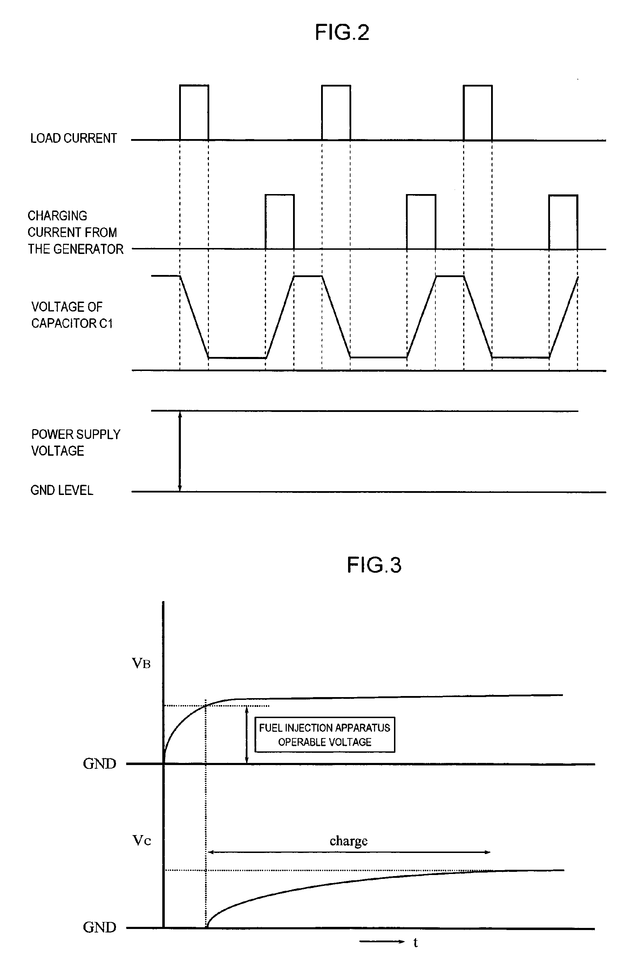

FIG.2 briefly shows variations in the capacitor C1 and the voltage (power supply voltage) of the main power supply circuit in the power supply control apparatus for vehicles.

For example, when the voltage of the power supply output line 11 (FIG.1) starts falling due to an occurrence of a pulse-like load current as shown in FIG.2, the discharge circuit 5 (FIG.1) operates, and the voltage of the capacitor C1 falls, but the voltage of the power supply output line 11 is maintained at a predetermined level (for example, 12V) because the power is supplied from the capacitor 1.

Next, when the charging current as shown in FIG.2 is supplied from the generator 1 (FIG.1) via the constant voltage rectifier circuit 2, the charging circuit 4 (FIG.1) operates this time, the power supplied from the generator 1 is charged in the capacitor C1, and therefore, the voltage of the capacitor 1 increases during the period, while the voltage of the power supply output line 11 is still maintained at the predetermined level.

Thus, in the apparatus, the capacitor C1 serves as a buffer in the load current fed to loads and the charging current supplied from the generator 1, and thereby enables the level of the power supply voltage to be maintained at a specified range.

FIG.3 shows rising of voltages of the power supply output line 11 of the main power supply circuit, and of the capacitor C1 after the charging circuit 4 starts charging, in the case where the engine is first actuated using a kick lever or the like with the capacitor C1 charged with the charge voltage of 0.

When the engine is actuated, the generator ("1" in FIG.1) supplies the power to the power supply output line 11 of the main power supply circuit, and the voltage of the power supply output line 11 increases gradually as shown in FIG.3. At the time the voltage of the power supply output line 11 exceeds a predetermined value (for example, operable voltage of the fuel injection control apparatus), charging the capacitor C1 is started, and the capacitor C1 charges the voltage up to a predetermined level (for example, DC 3V).

FIG.4 shows an ideal timing chart of the capacitor C1 and the power supply output line voltage in the power supply control apparatus for vehicles.

FIG. 5 shows a practical timing chart of the capacitor C1 and the power supply output line voltage in the power supply control apparatus for vehicles.

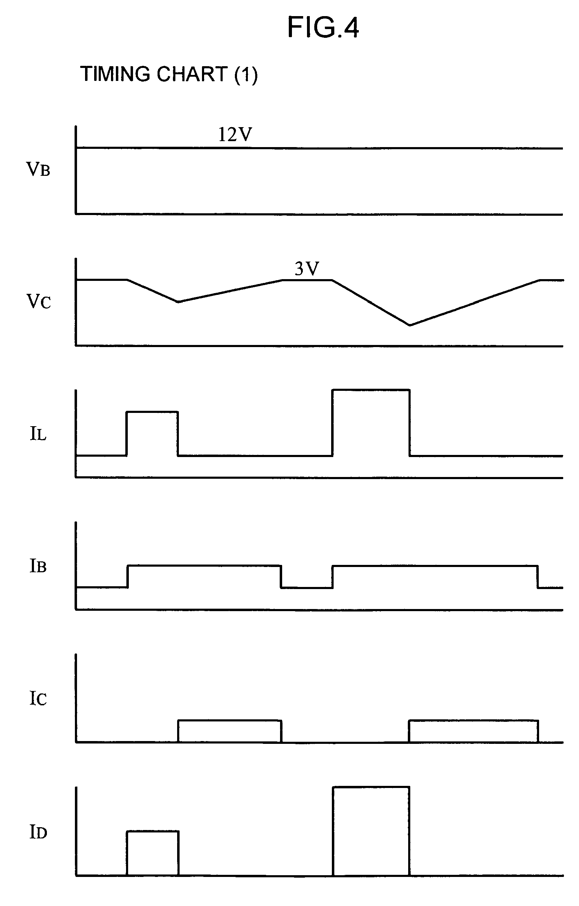

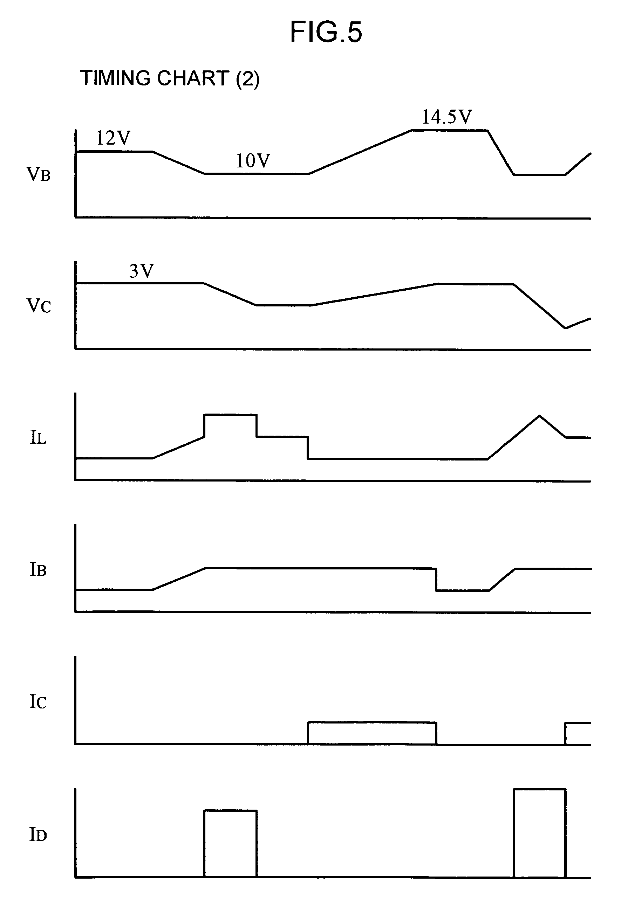

In FIGs. 4 and 5, V_{B} denotes the voltage of the power supply output line 11 as shown in FIG.1, Vc denotes the voltage of the capacitor C1, I_{L} denotes the load current, I_{B} denotes the current supplied from the generator 1, Ic denotes the charging current from the power supply output line 11 to the capacitor C1, and I_{D} denotes the discharging current from the capacitor C1 to the power supply output line 11.

In the timing chart as shown in FIG.4, the voltage V_{B} of the power supply output line 11 is controlled to be constant, and always maintained at DC 12V that is a set value because the charged voltage of the capacitor C1 is not discharged to 0V.

In the example as shown in the timing chart, since the equilibrium is achieved between the current level (I_{B}xT) supplied from the generator 1 to the power supply output line 11 and the load current level (I_{L}xT) released from the power supply output line 11 during some period of time (T), the voltage V_{B} of the power supply output line 11 is maintained constant. As shown in the figure, during some period of time (T), the load current I_{L} always varies due to constant loads such as a headlamp and variable loads such as a fuel injection apparatus and an ignition plug. Meanwhile, the current I_{B} supplied from the generator 1 to the power supply output line 11 also varies due to the revolution state of the engine and so on.

Since the load current I_{L} and the supply current I_{B} do not shift in the same current waveform, the voltage V_{B} of the power supply output line 11 varies largely, for example, as shown in FIG. 9, unless the capacitor C1 exists. However, in the power supply for vehicles, when the supply current I_{B} from the generator 1 exceeds the load current I_{L}, the charging circuit 4 (FIG.1) is actuated and charges (I_{C}) the excessive current to the capacitor C1. Meanwhile, when the supply current I_{B} from the generator 1 is lower than the load current I_{L}, the discharging circuit 5 (FIG.1) is actuated and discharges (I_{D}) the power charged in the capacitor C1 to the power supply output line 11.

In the timing chart as shown in FIG.5, an example is indicated where since the equilibrium is not achieved between the current level (I_{B}xT) supplied from the generator 1 to the power supply output line 11 and the load current level (I_{L}xT) released from the power supply output line 11 during some period of time (T), the voltage V_{B} of the power supply output line 11 varies in some voltage range.

As described above, during some period of time (T), the load current I_{L} always varies due to constant loads such as a headlamp and variable loads such as a fuel injection apparatus and an ignition plug. Meanwhile, the current I_{B} supplied from the generator 1 to the power supply output line 11 also varies due to the revolution state of the engine and so on, and the capacitor C1 has a large but finite capacitance value where the tolerance voltage is about DC 3V.

Accordingly, when the degree of disequilibrium between the current level (I_{B}xT) supplied from the generator 1 to the power supply output line 11 and the load current level (I_{L}xT) released from the power supply output line 11 exceeds the capacitance and tolerance voltage of the capacitor C1, as shown in FIG.5, the voltage of the power supply output line 11 is not stabled to DC 12V always. However, also in the example as shown in the timing chart, in ranges of the capacitor and tolerance voltage, the capacitor C1 charges (I_{C}) the excessive current when the supply current I_{B} from the generator 1 exceeds the load current I_{L}, while discharging (I_{D}) the power charged in the capacitor C1 to the power supply output line 11 when the supply current I_{B} from the generator 1 is lower than the load current I_{L}.

When the capacitor C1 does not exist, as shown in FIG.9, the voltage V_{B} of the power supply output line 11 varies largely. However, in the power supply for vehicles, the variation range of the voltage V_{B} of the power supply output line 11 is limited significantly.

FIG.6 is a diagram to explain the operation of the charging circuit 4 in the power supply control apparatus for vehicles.

As described above, the charging circuit 4 is a PWM (Pulse Width Modulation) switching regulator scheme DC/DC converter configured to convert the power with the first voltage level (12V) of the main power supply circuit charged in the capacitor C2 supplied from the generator 1 via the constant voltage rectifier circuit 2 into the lower power with the second voltage level (for example, 4.5V) to charge the capacitor C1.

In FIG.6, the PWM control circuit constitutes a primary part of the charge control circuit 41 as shown in FIG.1. The PWM control circuit outputs a pulse signal to a gate of the transistor T1, the transistor T1 thereby repeats ON and OFF, and thus, the power supply voltage of the power supply output line 11 is decreased and charged in the capacitor C1.

The PWM control circuit in FIG.6 may be either a separately-excited system provided with an issue circuit that issues a pulse signal with a predetermined frequency or a self-excited system without the issue circuit. The issue frequency of a PWM signal is fixed in the separately-excited system, while varying in the self-excited system.

It is assumed that in FIG.6 that a PWM signal with a predetermined duty ratio (ratio of ON time to one pulse cycle) is supplied from a terminal C of the PWM control circuit to the gate of the transistor T1. The transistor T1 is conducting (ON) when the PWM signal is high. The voltage with the first voltage level in the power supply output line 11 is thereby applied to the inductor L1 and the capacitor C1. When the voltage of the capacitor C1 is zero, almost part of the voltage with the first voltage level is applied to the inductor L1. Applying the voltage to the inductor L1 causes the charging current from the power supply output line 11 to flow to the capacitor C1 via the transistor T1, inductor L1 and diode D3.

At this point, when the PWM signal input to the gate of the transistor T1 becomes low, the transistor T1 is brought out of conduction (OFF). However, even when the transistor T1 is OFF, the inductor L1 keeps the charging current of the time the transistor T1 becomes OFF, and generates the inverse electromotive force. By the effect of the inverse electromotive force, the diode D2 becomes ON, and the charging current is supplied from the ground side via the diode D2 this time, and then attenuates gradually. Thus, the capacitor C1 is charged by the charging current flowing to the capacitor C1.

The voltage of the capacitor C1 is input to a terminal A of the PWM control circuit. The reference voltage Vr1 is input to a terminal B of the PWM control circuit. The PWM control circuit always compares the voltage of the capacitor C1 with the reference voltage Vr1, increases the duty ratio of the PWM signal when the voltage of the capacitor C1 is lower than a predetermined set value, while decreasing the duty ratio of the PWM signal when the voltage of the capacitor C1 is higher than the predetermined set value, and thus maintains the voltage of the capacitor C1 at the second voltage level.

FIG.7 is a diagram to explain the operation of the discharging circuit 5 in the power supply control apparatus for vehicles.

As described above, the discharging circuit 5 is a PWM (Pulse Width Modulation) switching regulator scheme DC/DC converter configured to convert the power with the second voltage level charged in the capacitor C1 into the power with the first voltage level to return to the main power supply circuit.

In FIG.7, the PWM control circuit constitutes a primary part of the discharge control circuit 51 as shown in FIG.1. The PWM control circuit outputs a pulse signal to a gate of the transistor T2, the transistor T2 thereby repeats ON and OFF, and thus, the power with the second voltage level charged in the capacitor C1 is increased to the voltage with the first voltage level of the power supply output line 11 to supply (discharge) to the power supply output line 11.

The discharge prohibition control circuit 6 as shown in FIG.7 detects the actuation of the engine, and immediately switches the transistor T3 on. Similarly to the PWM control circuit as shown in FIG.6, the PWM control circuit may be either a separately-excited system provided with an issue circuit that issues a pulse signal with a predetermined frequency or a self-excited system without the issue circuit.

It is assumed that in FIG.7 that a PWM signal with a predetermined duty ratio is supplied from a terminal C of the PWM control circuit to the gate of the transistor T2. The transistor T2 is conducting (ON) when the PWM signal is high. The voltage in the capacitor C1 is thereby applied to the inductor L1. When the voltage is applied to the inductor L1, the discharging current from the capacitor C1 flows to GND via the transistor T3, inductor L1, and transistor T2.

At this point, when the PWM signal input to the gate of the transistor T2 becomes low, the transistor T2 is brought out of conduction (OFF) . However, even when the transistor T2 is OFF, the inductor L1 keeps the discharging current of the time the transistor T2 becomes OFF, and generates the inverse electromotive force. By the effect of the inverse electromotive force, the diode D1 becomes ON, and the discharging current flows to the power supply output line 11 via the diode D1.

The voltage of the power supply output line 11 is input to a terminal A of the PWM control circuit. The reference voltage Vr2 is input to a terminal B of the PWM control circuit. The PWM control circuit always compares the voltage of the power supply output line 11 with the reference voltage Vr2, increases the duty ratio of the PWM signal when the voltage of the power supply output line 11 is lower than a predetermined set value, while decreasing the duty ratio of the PWM signal when the voltage of the power supply output line 11 is higher than the predetermined set value, and thus maintains the voltage of the power supply output line 11 at the first voltage level (12V).

In addition, the photo-power charging circuit 9 converts the power generated by the solar battery 8 into the voltage of the capacitor C1 to charge. It is thus possible to compensate for the power lost by the internal discharging (self-discharging) of the capacitor C1. As described above, since the capacitor C1 is an electric double layer capacitor, power per unit time lost by the internal discharging is extremely a little.

It is thus assured that the capacitor C1 is always charged with the power, and even when the vehicle is not used for a long time, the power supply for vehicles of the present invention is capable of supplying the voltage with a predetermined value to an electromagnetic fuel injection apparatus and a control circuit mounted on the vehicle, and enables excellent startup of the engine.

The example is described in this embodiment of the present invention where the voltage (second voltage level) of the energy charged in the capacitor C1 is lower than the voltage (first voltage level) of the main power supply circuit. However, in the power supply control apparatus for vehicles, the second voltage level may be set at a higher level than the first voltage level.

In this case, the charging circuit 4 as described in FIG.1 is a voltage increasing type DC/DC converter, and the discharging circuit 5 is a voltage decreasing type DC/DC converter or a series type regulator. Then, setting the second voltage level to be slightly higher (by about 1 to 2V) than the first voltage level, it is possible to configure so that the discharging circuit 5 does not need to convert in voltage the energy charged in the capacitor C1 to provide to the power supply output line 11 at the time of actuating the engine. Such a modification belongs to the scope of the subject matter of the power supply control apparatus and the power supply for vehicles according to the present invention.

### Industrial Applicability

The present invention relates to a power supply control apparatus and a power supply for vehicles including two-wheeled vehicles each having an internal-combustion engine and thus has the industrial applicability.

### Brief Description of the Drawings

FIG.1 shows an example of an entire circuit configuration of a power supply including a power supply control apparatus for vehicles of the present invention;
FIG.2 shows variations in a capacitor C1 and power supply voltage of a main power supply circuit in the power supply control apparatus for vehicles;
FIG.3 shows rising of voltages of the power supply output line and the capacitor C1 when an engine is first actuated;
FIG.4 shows an example of an ideal timing chart of the capacitor C1 and the power supply output line in the power supply control apparatus for vehicles;
FIG.5 shows an example of a practical timing chart of the capacitor C1 and the power supply output line in the power supply control apparatus for vehicles;
FIG.6 is a diagram to explain the operation of a charging circuit 4 in the power supply control apparatus for vehicles;
FIG.7 is a diagram to explain the operation of a discharging circuit 5 in the power supply control apparatus for vehicles;
FIG. 8 shows an example of a power supply for vehicles such as two-wheeled vehicles without a battery according to a conventional technique; and
FIG. 9 shows variations in power supply voltage where the power supply for vehicles as shown in FIG.8 is connected to variable loads such as a fuel injection apparatus and an ignition plug.

### Description of Notations

- 1: GENERATOR
- 2: CONSTANT VOLTAGE RECTIFIER CIRCUIT
- 3: LOADS
- 4: CHARGING CIRCUIT
- 5: DISCHARGING CIRCUIT
- 6: DISCHARGE PROHIBITION CONTROL CIRCUIT
- 7: CAPACITOR VOLTAGE MONITORING CIRCUIT
- 8: SOLAR BATTERY
- 9: PHOTO-POWER CHARGING CIRCUIT
- 11: POWER SUPPLY OUTPUT LINE
- C1: CAPACITOR

## Claims

1. A power supply control apparatus for vehicles, comprising:
a charging circuit that converts power-supply power with a first voltage level supplied from a main power supply circuit in an internal-combustion engine into power with a second voltage level;
a capacitor that charges the power with the second voltage level which is converted in the charging circuit; and
a discharging circuit that converts the power with the second voltage level charged in the capacitor into the power with the first voltage level to supply to the main power supply circuit when the voltage of the power-supply power falls below a preset specified value,
wherein a power supply voltage is maintained at a predetermined range in the main power supply circuit in the internal-combustion engine.

2. A power supply for vehicles, comprising:
a main power supply circuit that supplies power generated by a generator coupled to an internal-combustion engine to each load;
a charging circuit that converts power-supply power with a first voltage level supplied from the main power supply circuit into power with a second voltage level;
a capacitor that charges the power with the second voltage level which is converted in the charging circuit; and
a discharging circuit that converts the power with the second voltage level charged in the capacitor into the power with the first voltage level to supply to the main power supply circuit when a power supply voltage falls below a preset specified value,
wherein the power supply voltage is maintained at a predetermined range in the main power supply circuit in the internal-combustion engine.

3. The power supply control apparatus for vehicles according to claim 1 or the power supply for vehicles according to claim 2, further comprising:
a discharge prohibition control circuit that detects a halt of the internal-combustion engine and prohibits operation of the discharging circuit.

4. The power supply control apparatus for vehicles or the power supply for vehicles according to claim 3, wherein the halt of the internal-combustion engine is detected based on a crank rotation signal of the internal-combustion engine or an output voltage waveform of the generator.

5. The power supply control apparatus for vehicles according to claim 1 or the power supply for vehicles according to claim 2, wherein the discharging circuit operates at the time of starting up the internal-combustion engine, and the power is supplied to the main power supply circuit from the capacitor.

6. The power supply control apparatus for vehicles according to claim 1 or the power supply for vehicles according to claim 2, wherein the charging circuit has a charge control circuit that interrupts charging to the capacitor from the main power supply circuit when a voltage level of the capacitor exceeds a predetermined value.

7. The power supply control apparatus for vehicles according to claim 1 or the power supply for vehicles according to claim 2, wherein the charging circuit is actuated when the voltage of the main power supply circuit is a predetermined value or more and the voltage of the capacitor decreases to a predetermined value or less.

8. The power supply control apparatus for vehicles according to claim 1 or the power supply for vehicles according to claim 2, wherein the capacitor is an electric double layer capacitor.

9. The power supply control apparatus for vehicles according to claim 1 or the power supply for vehicles according to claim 2, further comprising:
a photoelectric conversion apparatus; and
a photo-power charging circuit that charges the capacitor with the power generated in the photoelectric conversion apparatus.

10. The power supply control apparatus for vehicles or the power supply for vehicles according to claim 7, wherein a DC/DC converter constituting the charging circuit and another DC/DC converter constituting the discharging circuit share a single inductor, and one terminal of the inductor is connected to the charging circuit and the discharging circuit, while the other terminal of the inductor is connected to the capacitor side.

11. The power supply control apparatus for vehicles according to claim 1 or the power supply for vehicles according to claim 2, wherein the second voltage level is lower than the first voltage level.

12. The power supply control apparatus for vehicles or the power supply for vehicles according to claim 11, wherein the first voltage level ranges from DC 11.5V to 14.5V, while the second voltage level ranges from DC 2.5V to 6V.
